# EUROPEAN PATENT SPECIFICATION

(11) **EP 3 118 090 B1**
(45) Date of publication and mention of the grant of the patent: **19.09.2018**
(21) Application number: 15176965.0
(22) Date of filing: 16.07.2015
(51) Int. Cl.: B62D 35/00

(54) **LATCHING DEVICE FOR A SIDE SECTION OF A TRUCK**
VERRIEGELUNGSVORRICHTUNG FÜR DIE SEITE EINES LKW
DISPOSITIF DE VERROUILLAGE POUR UNE SECTION LATÉRALE D'UN CAMION

(43) Date of publication of application: 18.01.2017
(73) Proprietor: Ford Global Technologies, LLC, Dearborn, MI 48126 (US); Ford Otomotiv Sanayi Anonim Sirketi, 34885 Istanbul (TR)
(72) Inventor: Durmaz, Deniz, Odunpazari/Eskisehir (TR); Karadag, Fatih, TEPEBASI ESKISEHIR (TR); Tuna, Utku, 26020 Odunpazari - ESKISEHIR (TR); Uzungörür, Murat, Tepebasi-Eskisehir (TR)
(74) Representative: Illing, Rolf

(56) References cited:
- EP-A2- 1 055 589
- FR-A1- 2 933 943
- US-A- 5 232 260
- US-A1- 2005 012 344

## Description

The invention is related to a latching device for reversibly fastening a side section of a truck to a structure of a cabin of a tractor of the truck.

The gap between a tractor and a trailer in a truck, particularly a semi-trailer truck, causes aerodynamic drag and air turbulence which has a negative impact on fuel efficiency and maneuverability, particularly at high speeds. The aerodynamics of such a truck can be improved by a arranging a side section at the rear side of the driver cabin of the tractor. The side section is a kind of an extension of the side of the cabin directing airflow over the sides of the trailer.

The side sections are usually connected to the cabin by a plurality of hinges. The hinges are built in a way which facilitates a rotation movement of the side sections. The rotation movement of the side sections is useful because that way the side sections are able to effectively direct the airflow while accommodating the relative movement of the tractor and adjacent trailer during a turn. Further, upon connecting or disconnecting the trailer from the tractor, the side sections must be moved so that connecting mechanisms for the trailer become accessible. After the trailer has been connected to the tractor, the side sections are brought back into a position closing the gap between the tractor and the trailer. The side sections are formed to be arranged at the side of the tractor, where they usually are hold in a position by spring loaded panels. Examples of spring loaded panels are disclosed e.g. in the US 5 232 260 A, which is related to a pivotment of tailgate members of a truck tailgate at truck bed side walls, and in the US 2005/0012344 A1, which is related to a latching device for fixing aerodynamic chassis fairings to tractor trailers.

For the connecting process of the trailer to the tractor the side sections have to be fixed to the rear side of the cabin in order not to interfere with this process. Conventional fastening mechanisms, however, wear out over time by permanent use. This negatively affects the reliability of the fastening mechanisms and also leads to undesired vibrations as wells as to noisy squeaking and rattling of the fastening mechanisms.

It is the objective of the present invention to provide a fastening mechanism which is more resistant to wearing by intensive use.

The objective is solved by a latching device with features according to claim 1. Advantageous further developments of the invention are evident from the dependent claims, the figures and the example.

A first aspect of the invention refers to a latching device for reversibly fastening a side section of a truck to a structure of a tractor of the truck, the latching device comprising
- at least one skid with an aperture mounted to the structure of the tractor,
- at least one sleeve with a sliding rail mounted to the side section,
- a pin that is adapted to slide in the sliding rail, and that passes through the aperture in the skid, and
- at least one spring contained within the sleeve for keeping the pin in at least one predetermined position
characterized in that
- the pin is kept in a first position by a first spring, if the side section is not to be fastened, and
- the pin is kept in a second position by a second spring, if the side section is to be fastened.

The latching device is advantageous because its sliding mechanism provides a sophisticated connection of the side section to the tractor. A further advantage of the inventive latching device is a greater long term mechanical stability as compared to conventional fastening mechanisms.

The term "truck" as used in this description refers to a combination of a tractor and a trailer.

In a preferred embodiment the sleeve of the latching device is mounted on the side section in a way that the pin can slide into the aperture of the skid.

It is further preferred if the structure of the tractor is the rear side of a cabin of the tractor. This is advantageous because that way the side sections can be fastened to the rear side of the cabin during connecting or disconnecting operations of a trailer to the tractor.

It is advantageous if the pin of the inventive latching device is adapted to be moved from the first to the second position by application of manual force. It is also possible to use a suitable tool for moving the pin, or to adapt an additional spring for moving the pin, or to adapt a linear motor.

A second aspect of the invention is related to a side section of a truck with an inventive latching device. With other words the inventive side section comprised a latching device at least one skid with an aperture, at least one sleeve with a sliding rail mounted to a side section, a sliding pin that is adapted to slide in the sliding rail, and that passes through the aperture in the skid, and at least one spring contained within the sleeve for keeping the pin in at least one predetermined position.

A third aspect of the invention is related to a tractor with inventive side sections.

A fourth aspect of the invention is related to a method for reversibly fastening side sections of a rear side of a cabin of a tractor of a truck using an inventive latching device, the method comprising
- turning the side section to the rear side of the cabin,
- releasing a spring that is keeping the pin in a first position,
- moving the pin of the latching device from the first position into the second position,
- securing the pin in the aperture of the skid.

The advantaged of the inventive method correspond to the advantages of the inventive latching device. For bringing the side section back into a position at the side of the tractor, the steps of fastening the side section are performed in reverse order, namely releasing the pin from the aperture of the skid, pushing the pin from the second into the first position, securing the pin in the first position with the spring and turning the side section from the rear side of the cabin.

Embodiments of the invention are described in conjunction with the accompanying figures.
- Figure 1: shows an embodiment of an inventive latching device.
- Figure 2a: shows a configuration of the latching device according to Fig. 1 mounted to a side section and rear part of a cabin.
- Figure 2b: shows the configuration of Fig. 2a with an opened side section
- Figure 3: shows a flow chart of an embodiment of the inventive method.

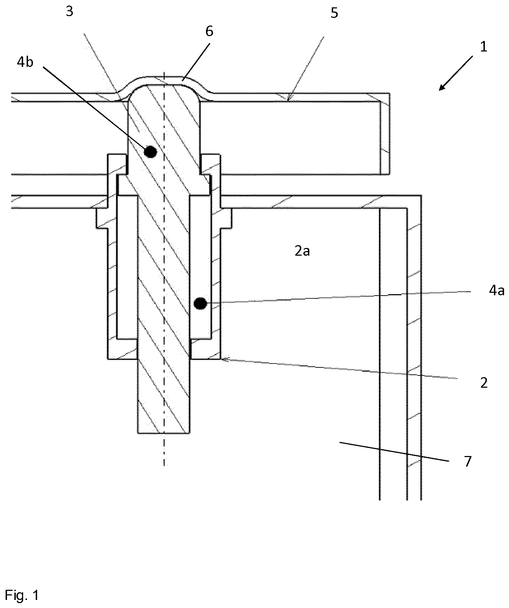

A latching device 1 according to the presentation of Fig. 1 comprises a sleeve 2, a pin 3 which can slide within a sliding rail 2a of the sleeve in two directions, and a first spring 4a and a second spring 4b, which are provided for holding the pin in a first and second position, respectively. The latching device 1 further comprises a skid 5 that bears an aperture 6 for receiving the pin. The aperture 6 comprises fixing devices for securing the pin 3, such as additional springs, screws, locks or bars. The latching device 1 comprises two parts, wherein a first part comprises the sleeve 2, the pin 3 and the springs 4a and 4b, and wherein a second part comprises the skid 5.

The latching device 1 has a rectangular appearance. The long sides of the rectangle are parallel to the sliding direction of the pin 3 in the sliding rail 2a. The short sides of the rectangle are perpendicular to the sliding direction of the pin 3, basically limiting the way of the pin 3.

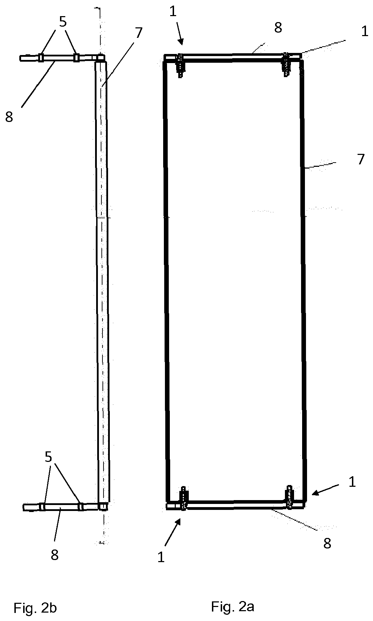

Referring to Fig. 2a, the latching device 1 is used to fasten a side section 7 to a rear side 8 of a cabin of a tractor. The first part of the latching device 1 is affixed to the side section 7. The second part of the latching device 1 is affixed to the rear side 8 of a cabin of a tractor. Each first part affixed to the side section 7 has a corresponding second part affixed to the rear side 8. The presentation of Fig. 2a shows a number of four latching devices 1 fastening the side section 7 to the rear side 8 of the cabin. If necessary, however, the number of latching devices 1 can be higher.

In the representation of Fig. 2b the side section 7 is opened, so its narrow side is visible. The skids 5 are affixed to the rear side 8 of the cabin.

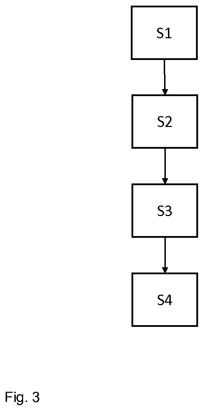

The embodiment of the inventive method for reversibly fastening side sections to the rear side of a cabin of the tractor using the inventive latching device according to Fig. 3 comprises a step S1 of turning the side section 7 to the rear side 8 of the cabin, so that the wide side of the side section 7 is parallel and in close contact to the rear side 8. In a second step S2 the first spring 4a that is keeping the pin 3 in the first position is release. In a third step S3 the pin 3 of the latching device is pushed from the first position into the second position. The pin 3 is then held in the second position by the second spring 4b. In a fourth step S4 the pin 3 is secured in the aperture 6 of the skid 5. The pin 3 is secured in the aperture by any suitable fixing device, such as additional springs, screws, locks or bars. Step S4 also comprises the fixing of the pin 3 in the second position by the second spring 4b.

If the side section 7 is to be disconnected from the rear side 8 of the cabin, the pin 3 is released from the aperture 6 by releasing the fixing devices and releasing the second spring 4b, pushing the pin 3 back into the first position and fixing the pin 3 in the first position by the first spring 4a.

Since various variations of the described embodiments are possible the invention shall only be limited by the scope of the claims.

### Reference signs

- 1: = latching device
- 2: = sleeve
- 2a: = sliding rail
- 3: = pin
- 4a: = first spring
- 4b: = second spring
- 5: = skid
- 6: = aperture
- 7: = side section
- 8: = rear side of a cabin

## Claims

1. A latching device (1) for reversibly fastening a side section (7) of a truck to a structure (8) of a tractor of the truck, the latching device (1) comprising
- at least one skid (5) with an aperture (6) mounted to the structure of the tractor,
- at least one sleeve (2) with a sliding rail (2a) mounted to the side section (7),
- a pin (3) that is adapted to slide in the sliding rail (2a), and that passes through the aperture (6) in the skid (5), and
- at least one spring (4a, 4b) comprised by the sleeve (2) for keeping the pin (3) in at least one predetermined position
**characterized in that**
- the pin (3) is kept in a first position by a first spring (4a), if the side section (7) is not to be fastened, and
- the pin (3) is kept in a second position by the second spring (4b), if the side section (7) is to be fastened.

2. The latching device (1) of claim 1, wherein the sleeve (2) of the latching device (1) is mounted on the side section (7) in a way that the pin (3) can slide into the aperture (6) of the skid (5).

3. The latching device (1) of claim 1 or 2, wherein the structure of the tractor is the rear side of a cabin of the tractor.

4. The latching device (1) of claim 4, wherein the pin (3) is adapted to be moved from the first to the second position by application of manual force.

5. Side section (7) of a truck with a latching device (1) according to any of the claims 1 - 4.

6. A truck with side sections according to claim 5.

7. Method for reversibly fastening side sections of a truck to the rear side of a cabin of a tractor of the truck using a latching device according to any of claims 1 - 4, the method comprising
- turning the side section (7) to the rear side (8) of the cabin,
- releasing the first spring (4a) that is keeping the pin (3) in the first position,
- moving the pin (3) of the latching device (1) from the first position into the second position,
- securing the pin (3) in the aperture (6) of the skid (5).

## Patentansprüche

1. Verriegelungsvorrichtung (1) für eine umkehrbare Befestigung eines Seitenteils (7) eines Lkw an einer Struktur (8) einer Zugmaschine des Lkw, wobei die Verriegelungsvorrichtung (1) Folgendes umfasst
- mindestens eine Kufe (5) mit einer Öffnung (6), die an der Struktur der Zugmaschine montiert ist,
- mindestens eine Buchse (2) mit einer Gleitschiene (2a), die am Seitenteil (7) montiert ist,
- einen Bolzen (3), der angepasst ist, in der Gleitschiene (2a) zu gleiten, und der durch die Öffnung (6) in der Kufe (5) geführt wird, und
- mindestens eine Feder (4a, 4b), die von der Buchse (2) zusammengedrückt wird, um den Bolzen (3) in mindestens einer vorbestimmten Position zu halten
**dadurch gekennzeichnet, dass**
- der Bolzen (3) von einer ersten Feder (4a) in einer ersten Position gehalten wird, wenn das Seitenteil (7) nicht befestigt werden soll, und
- der Bolzen (3) von der zweiten Feder (4b) in einer zweiten Position gehalten wird, wenn das Seitenteil (7) befestigt werden soll.

2. Verriegelungsvorrichtung (1) nach Anspruch 1, wobei die Buchse (2) der Verriegelungsvorrichtung (1) in einer Weise am Seitenteil (7) montiert ist, dass der Bolzen (3) in die Öffnung (6) der Kufe (5) gleiten kann.

3. Verriegelungsvorrichtung (1) nach Anspruch 1 oder 2, wobei die Struktur der Zugmaschine die Rückseite eines Fahrerhauses der Zugmaschine ist.

4. Verriegelungsvorrichtung (1) nach Anspruch 4, wobei der Bolzen (3) angepasst ist, durch Anwenden einer manuellen Kraft von der ersten in die zweite Position bewegt zu werden.

5. Seitenteil (7) eines Lkw mit einer Verriegelungsvorrichtung (1) nach einem der Ansprüche 1-4.

6. Lkw mit Seitenteilen nach Anspruch 5.

7. Verfahren zum umkehrbaren Befestigen von Seitenteilen eines Lkw an der Rückseite eines Fahrerhauses einer Zugmaschine des Lkw unter Verwendung einer Verriegelungsvorrichtung nach einem der Ansprüche 1-4, wobei das Verfahren Folgendes umfasst
- Drehen des Seitenteils (7) zur Rückseite (8) des Fahrerhauses,
- Lösen der ersten Feder (4a), die den Bolzen (3) in der ersten Position hält,
- Bewegen des Bolzens (3) der Verriegelungsvorrichtung (1) aus der ersten Position in die zweite Position,
- Sichern des Bolzens (3) in der Öffnung (6) der Kufe (5).

## Revendications

1. Dispositif de verrouillage (1) pour fixer de manière réversible une section latérale (7) d'un camion à une structure (8) d'un tracteur du camion, le dispositif de verrouillage (1) comprenant
au moins un patin (5) avec une ouverture (6) monté sur la structure du tracteur,
au moins un manchon (2) avec un rail coulissant (2a) monté sur la section latérale (7),
une goupille (3) qui est conçue pour coulisser dans le rail coulissant (2a), et qui passe à travers l'ouverture (6) dans le patin (5), et
au moins un ressort (4a, 4b) constitué par le manchon (2) pour maintenir la goupille (3) dans au moins une position prédéfinie,
**caractérisé en ce que**
la goupille (3) est maintenue dans une première position par un premier ressort (4a), si la section latérale (7) ne doit pas être fixée, et
la goupille (3) est maintenue dans une seconde position par le second ressort (4b), si la section latérale (7) doit être fixée.

2. Dispositif de verrouillage (1) selon la revendication 1, le manchon (2) du dispositif de verrouillage (1) étant monté sur la section latérale (7) de sorte que la goupille (3) puisse coulisser dans l'ouverture (6) du patin (5).

3. Dispositif de verrouillage (1) selon la revendication 1 ou 2, la structure du tracteur étant le côté arrière d'une cabine du tracteur.

4. Dispositif de verrouillage (1) selon la revendication 4, la goupille (3) étant conçue pour être déplacée de la première à la seconde position par application d'une force manuelle.

5. Section latérale (7) d'un camion doté d'un dispositif de verrouillage (1) selon l'une quelconque des revendications 1 à 4.

6. Camion doté de sections latérales selon la revendication 5.

7. Procédé de fixation réversible de sections latérales d'un camion au côté arrière d'une cabine d'un tracteur du camion à l'aide d'un dispositif de verrouillage selon l'une quelconque des revendications 1 à 4, le procédé comprenant les étapes consistant à
tourner la section latérale (7) vers le côté arrière (8) de la cabine,
relâcher le premier ressort (4a) qui maintient la goupille (3) dans la première position,
déplacer la goupille (3) du dispositif de verrouillage (1) de la première position dans la seconde position,
fixer la goupille (3) dans l'ouverture (6) du patin (5) .
